# EUROPÄISCHE PATENTSCHRIFT

(11) **EP 1 388 808 B1**
(45) Veröffentlichungstag und Bekanntmachung des Hinweises auf die Patenterteilung: **04.03.2009**
(21) Anmeldenummer: 03018198.6
(22) Anmeldetag: 12.08.1999
(51) Int. Cl.: G06K 19/06, G06K 19/16, G06K 19/077

(54) **Datenträger**
Data carrier
Support de données

(43) Veröffentlichungstag der Anmeldung: 11.02.2004
(62) Teilanmeldung aus: 99115844.5
(73) Patentinhaber: OVD Kinegram AG, 6301 Zug (CH)
(72) Erfinder: Minnetian, Ohannes, 6274 Eschenbach (CH); Tompkin, Wayne Robert, 5400 Baden (CH); Staub, René, 6332 Hagendorn (CH)
(74) Vertreter: LOUIS, PÖHLAU, LOHRENTZ

(56) Entgegenhaltungen:
- EP-A- 0 717 389
- EP-A- 0 914 921
- US-A- 4 304 809
- US-A- 4 463 971
- US-A- 5 304 513
- US-A- 5 681 356
- US-A- 5 882 463

## Beschreibung

Die Erfindung bezieht sich auf einen Datenträger nach dem Oberbegriff des Anspruchs 1 und ein Verfahren zur Herstellung eines solchen Datenträgers nach dem Oberbegriff des Anspruchs 19.

Solche Datenträger dienen als Identitätskarte (Personalausweis, Checkkarte, Abonnement für Transportunternehmen usw.), als elektronisches Zahlmittel (smart card), als Berechtigungsausweis für eine Zutrittskontrolle usw. und weisen als Echtheitsmerkmal wenigstens ein Sicherheitsmerkmal mit beugungsoptisch wirksamen Strukturen auf.

Die EP-914'921 A1 beschreibt ein Verfahren und eine Vorrichtung zum Spritzgiessen von Datenträgern in Form von Codekarten gemäß dem Oberbegriff des Anspruchs 1. Die Codekarte besteht aus zwei gespritzten, flächigen Kunststoffschalen, die zur Codekarte zusammengefügt, einen Hohlraum einschliessen, der Raum für eine Spule und andere Gegenstände, wie z.B. Kunststoff- oder Metallteile, Magnete, Hologramme, Photographien, usw., bietet.

Die EP 717 389 A1 beschreibt ein Kennzeichnungsetikett, bei welchem ein Hologramm zwischen einer transparenten Schicht und einer Kleberschicht eingebettet ist.

Die US 4,304,809 beschreibt eine Identitätskarte, welche durch Lamination gebildet ist und wobei ein Kartenkern mit einer Fensteröffnung enthaltend Gitterbilder enthalten ist.

Ein Datenträger ist aus der CH-PS 672'285 bekannt, der einen in Spritzguss erzeugten, massiven, aber flexiblen Körper aus Kunststoff mit einer Ausnehmung zur Aufnahme von integrierten Schaltungen aufweist.

Aus der WO 96/34730 ist ein Verfahren zum Herstellen von ein- oder beidseitig mit einem bedruckten Etikett versehene Kunststoffkarten bekannt, bei dem zunächst die bedruckten, mit magnetischen Aufzeichnungsstreifen oder Sicherheitsmerkmale mit beugungsoptisch wirksamen Strukturen versehenen Etiketten erzeugt werden. Die Rückseite der Etiketten bzw. zwischen den Rückseiten zweier Etiketten wird in einer Spritzgussform Kunststoffmaterial angespritzt, um die von ISO vorgeschriebene Dicke der Ausweiskarten zu erhalten. Ausdrücklich werden hier auf die in der WO 96/34730 enthaltenen technischen Details zum Bedrucken von Kunststoffkarten und den Ueberlegungen zur Spritzgusstechnik verwiesen. Zum Schutz der auf dem Etikett angebrachten Indicia gegen mechanische Einwirkungen wird ein transparenter Schutzlack aufgetragen.

Die EP-709'805 A2 lehrt Hologramme, Magnetstreifen und elektronische Module in die Hauptflächen einer Datenkarte einzubetten, wobei elektronische Module für einen berührungslosen Datenaustausch auch im Innern der Karte angeordnet sein können. Es wird kein Spritzgussverfahren angewendet, sondern ein Granulat verschiedenster Körnung zusammen mit dem eingebetteten elektronischen Modul bei erhöhter Temperatur verpresst.

In Laminate aus Kunststoff eingebettete Muster aus Beugungsstrukturen dienen als fälschungssichere Merkmale zur Beglaubigung der Echtheit wertvoller Gegenstände. Besonders die visuell wahrnehmbaren Muster, Schriften usw. aus Beugungsstrukturen, die beim Drehen um eine der Achsen des Laminats nacheinander sichtbar werden und einen sequentiellen Ablauf von Bildern erzeugen, sind z.B. aus den Patentschriften CH-PS 659'433, EP-330'738 A1, EP-375'833 A1, EP-537'439 A1 bekannt, während der Schichtaufbau der Laminate in der CH-PS 680'170, der EP-401'466 A1 usw. beschrieben ist.

Die CH-PS 678'835 zeigt einen Ausweis mit einer gegen ein Austauschen gesicherten Photographie. Eine Marke aus dem Laminat mit dem Muster aus eingebetteten Beugungsstrukturen überdeckt einen Teil der auf den Ausweis geklebten Photographie des Inhabers und einen angrenzenden Teil des Ausweises. Die Photographie steht wesentlich über der Oberfläche des Dokuments vor, so dass die Marke im Bereich der von ihr abgedeckten Berandung der Photographie gerade dort besonders anfällig auf mechanische Beschädigungen ist, wo eine unbefugtes Austauschen der Photographie überprüft werden muss. Ein Abdecken des Ausweises mit einer Laminierfolie verzögert lediglich ein Auftreten von Beschädigungen.

Nach der EP-741'370 A1 (= US 5 882 463) ist das aus unzusammenhängenden, kleinen Flächenteilen auf einem Datenträger zusammengesetzte Sicherheitsmerkmal zum Schutz gegen ein Abstossen der Flächenteile ganz oder teilweise mit einem kratzfesten, bedruckbaren und vorteilhaft mit UV Strahlung zu härtenden Lack überzogen.

Ein Nachteil der bekannten Ausweiskarten mit einem Sicherheitsmerkmal, insbesondere der "smart cards", der Identitätskarten usw., ist deren Anfälligkeit auf mechanische Beschädigungen, die in der langen Gebrauchsdauer auftreten. Die Ausweiskarten werden täglich mechanisch belastet, sei es im Portemonnaie oder sei es beim Einführen durch enge, metallische Blendenöffnungen von Lesegeräten aller Art. Dies stellt an die Scheuerfestigkeit der Kartenoberfläche grosse Anforderungen, speziell wenn im Bereich des Sicherheitsmerkmals und anderer Indicia die Ausweiskarten verdickt und daher die Oberfläche nicht eben ist.

Die Aufgabe der Erfindung ist eine spannungsfreie, kostengünstige Ausweiskarte mit einer grossen Scheuerfestigkeit des Sicherheitsmerkmals zu schaffen und ein kostengünstiges Herstellverfahren für eine solche Ausweiskarte mit diesen Eigenschaften anzugeben.

Die Lösung der Aufgabe gelingt durch die in den Ansprüche 1 und 19 angegebenen Merkmale. Vorteilhafte Ausgestaltungen der Erfindung ergeben sich aus den abhängigen Ansprüchen.

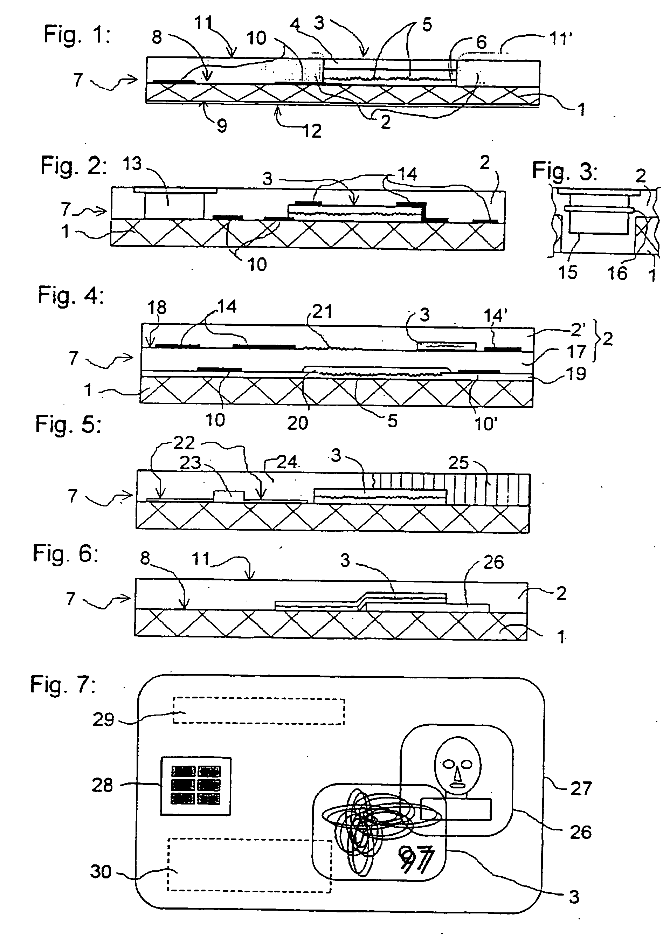

Ausführungsbeispiele der Erfindung werden anhand der Zeichnungen (mit Ausnahme der Fig. 1) näher erläutert.

Es zeigen:
- Figur 1: schematisch einen Datenträger mit einem Sicherheitselement im Querschnitt,
- Figur 2: einen Datenträger mit Indicia und einer Ausnehmung für ein IC-Modul,
- Figur 3: eine Auskleidung zur Aufnahme des IC-Moduls,
- Figur 4: der Datenträger mit sichtbaren Elementen in zwei Ebenen,
- Figur 5: einen Datenträger mit einem kontaktlosen IC-Modul,
- Figur 6: einen Datenträger mit einem gesicherten Bild,
- Figur 7: die Vorderseite eines Datenträgers,
- Figur 7a: die Rückseite eines Datenträgers,
- Figur 8: die Vorderseite eines Datenträgers mit einer lokal begrenzten Schutzschicht,
- Figur 8a: einen Datenträger im Querschnitt mit einer Spritzform und
- Figur 9: eine Schutzschicht mit Oberflächenstruktur.

In der Figur 1 bedeutet 1 ein Substrat, 2 eine Schutzschicht, 3 ein Sicherheitselement mit einer Deckschicht 4 über einem Beugungselement 5 einschliessenden Laminat 6. Die mit den Bezugszahlen 1 bis 6 bezeichneten Teile bilden zusammen einen, in dieser Darstellung im Querschnitt gezeigten Schichtverbund 7 für Datenträger. Dieser Schichtverbund 7 weist eine Dicke von weniger als 0,1 mm bis etwa 2 mm auf, wobei für einen typischen flächigen Datenträger gemäss ISO Norm 7816-1 die Abmessungen mit 85,4 mm x 54 mm bei einer Dicke von 0,76 mm festgelegt sind. Allerdings werden oft auch andere Dicken im Bereich 0,6 mm bis 1,0 mm bevorzugt.

Das Substrat 1 ist ein flächiger Gegenstand aus Metall, Papier usw. oder einem Kunststoff. Für Wertkarten hoher Qualität werden Folien aus Kunststoff mit einer Dicke von 0,1 mm bis zu 1.0 mm verarbeitet. Hier ist das Substrat 1 aus einer bandförmigen Folie aus Kunststoff ausgestanzt. Die der Schutzschicht 2 zugewandte Seite des Substrats 1 ist die Informationsseite 8, die andere Seite des Substrats 1 ist die Rückseite 9. Das Substrat 1 weist wenigstens auf der Informationsseite 8 Informationsträger in Form von Indicia 10 auf, die drucktechnisch erzeugt sind und/oder auch in Form eines aufgeklebten Bildes auf, z.B. des Ausweisinhabers.

Das Sicherheitselement 3 besteht aus einem Laminat 6 aus wenigstens zwei Lackschichten. Zwischen zwei dieser Schichten sind die Beugungselemente 5 eingebettet. Die Beugungselemente 5 können Hologramme sein oder bilden aus Teilflächen mit abgeformten, mikroskopisch feinen Reliefstrukturen zusammengesetzte Muster, Schriften oder Bildsequenzen, die in den eingangs genannten Dokumenten beschrieben sind. Beim Kippen oder Drehen des Sicherheitselements 3 sieht der Betrachter eine Veränderung der Muster, der Schriften oder einen Ablauf von Bildern einer Sequenz. Die Sicherheitselemente 3 umfassen neben gewöhnlichen Hologrammen die eingangs erwähnten Sicherheitsmerkmale, die in den dort erwähnten Schriften beschrieben sind. Das Sicherheitselement 3 kann auf der Betrachtungsseite eine bis zu 100 µm dicke, zähe transparente Deckschicht 4 aufweisen, die das Laminat 6 vor mechanischem Abrieb schützt.

Auf der von der Deckschicht 4 bzw. Betrachtungsseite abgewandten Fläche ist das Laminat 6 zum Kleben ausgerüstet, um das Sicherheitselement 3 auf der Informationsseite 8 mit dem Substrat 1 zu verbinden. An der mit einem mikroskopisch feinen Relief der Beugungselemente 5 strukturierten Grenzfläche zwischen den beiden Lackschichten muss der Brechungsindex einen Sprung aufweisen, damit das aus dem Halbraum der Betrachtungsseite einfallende und an den Beugungselementen 5 gebeugte Licht wieder in den Halbraum zurückgeworfen wird. Sind die beiden Lackschichten transparent und weisen sie eine Differenz im Brechungsindex auf, sind auch die unter dem Sicherheitselement 3 angeordneten Indicia 10 sichtbar. Ein transparentes Dielektrikum mit hohem Brechungsindex, das als dünne Schicht auf der strukturierten Grenzfläche aufgetragen ist, vergrössert den Reflexionsgrad derart, dass die Indicia 10 nur unter den Raumwinkeln gut sichtbar sind, in denen kein gebeugtes Licht reflektiert wird. Anderseits reflektiert ein metallischer Ueberzug (Al, Au, Cu usw.) von mehr als 10 nm Dicke auf der strukturierten Grenzfläche das gebeugte Licht fast vollständig, so dass die unter dem Sicherheitselement 3 angeordneten Indicia 10 nicht sichtbar sind, es sei denn, das Motiv des Sicherheitselement 3 besteht aus einem filigranen feinen Linienmuster, bei dem der metallische Ueberzug so im Bereich der Linien aufgebracht ist, dass die beugenden und reflektierenden Linien von neutralen vollständig transparenten Gebieten getrennt sind, eine Ausführung, die in der eingangs erwähnten EP-537'439 A1 beschrieben ist.

Die Ausführung des Schichtverbunds 7 in der Figur 2 weist in der Schutzschicht 2 eine Vertiefung 13 für die Aufnahme eines Moduls mit einer integrierten Schaltung auf, die für elektronische vorbezahlte Wertkarten, Ausweiskarten, "smart cards", elektronische Geldbörsen usw. eingesetzt wird. Das Substrat 1 weist auf der Informationsseite 8 wenigstens das Sicherheitselement 3 auf. Einige der Indicia 10 können durch das Sicherheitselement 3 hindurch sichtbar sein oder sind als Druckbild 14 über dem Sicherheitselement 3 angeordnet. Danach wird die Schutzschicht 2 aus transparentem Kunststoff aufgespritzt und gleichzeitig die Vertiefung 13 in die Schutzschicht 2 eingeformt. Das Sicherheitselement 3 ist zwischen dem Substrat 1 und der Schutzschicht 2 völlig fugenlos eingeschlossen.

Bei der Ausführung nach der Figur 3 ist die Vertiefung 13 (Figur 2) mit einer einem Fingerhut ähnlichen Auskleidung 15 aus dünnem Metallblech oder Kunststoff ausgefüttert, wobei das Metall als Schirm gegen elektrische Störungen wirkt. Vor dem Spritzgiessen der Schutzschicht 2 ist die Auskleidung 15 am Ort der Vertiefung 13 in der Spritzform so angeordnet, dass beim Aufbringen der Schutzschicht 2 auf das mit dem Sicherheitselement 3 (Figur 2) bestückte Substrat 1 die Auskleidung 15 mit dem Kunststoff der Schutzschicht 2 umspritzt wird und in der Schutzschicht 2 die ausgekleidete Vertiefung 13 entsteht. Die Auskleidung 15 ist bündig mit der Oberfläche 11 (Figur 1) und erweitert sich gegen die Oberfläche 11, um das Kontaktfeld des Moduls mit der integrierten Schaltung aufzunehmen. Die Auskleidung 15 weist mit Vorteil wenigstens eine aussen auf ihrer Aussenseite umlaufende Rippe 16 und eine auf der Innenseite umlaufende Nut auf, damit sowohl die Auskleidung 15 in der Schutzschicht 2 als auch das zu einem späteren Zeitpunkt mit einer Verfüllmasse, z.B. mit dem unter der Marke Araldit^{®} bekannten Zweikomponentenkleber, eingeklebte Modul mit der integrierten Schaltung in der ausgekleideten Vertiefung 13 durch die von der Rippe 16 und der Nut erzeugten Verzahnung sicher verankert ist. Bei einem dicken Substrat 1 kann die aufgespritzte Schutzschicht für die Aufnahme der Auskleidung 15 zu dünn sein. Mit Vorteil wird am Ort der Vertiefung 13 in das Substrat 1 ein Loch gestanzt, das den unteren Teil der Auskleidung 15 aufnimmt, wobei beim Erzeugen der Schutzschicht 2 der Kunststoff allfällige Freiräume in diesem Loch verfüllt.

Bei der Ausführung des Schichtverbunds 7 in der Figur 4 ist die Schutzschicht 2 aus zwei Kunststoffschichten aufgebaut, der äusseren Schutzschicht 2' und einer zwischen der äusseren Schutzschicht 2' und dem Substrat 1 eingeschlossenen Zwischenschicht 17. Die Zwischenschicht 17 und die äussere Schutzschicht 2' sind im Spritzgussverfahren sukzessive nach der jeweiligen Bestückung der Informationsfläche 8 (Figur 1) bzw. der Oberseite 18 der Zwischenschicht 17 mit zusätzlichen Informationsmitteln, z.B. Sicherheitselement 3, Indicia 10, 10', Druckbild 14, 14' usw., erzeugt.

Eine andere Ausführung weist anstelle des aufgeklebten Sicherheitselements 3 ein direkt auf dem Substrat 1 erzeugtes Beugungsmuster auf. Die Informationsfläche 8 ist mit einer Prägeschicht 19 aus einem thermoplastischen Lack beschichtet und ein Relief mit der Beugungsstruktur 5 in die Prägeschicht 19 abgeformt. Die Beugungsstruktur 5 ist mit einem Schutzlack 20 zum Schutz des Reliefs während des Spritzvorgangs abgedeckt. Die Prägeschicht 19 und der Schutzlack 20 bzw. die Zwischenschicht 17 entsprechen den Schichten des Laminats 6 (Figur 1). Um die geforderte optische Wirkung zu erzeugen, ist die strukturierte Grenzfläche der Prägeschicht 19 wie beim Laminat 6 (Figur 1) ausgeführt. Die auf der Prägeschicht 19 angeordneten Indicia 10, 10' und die Beugungsstrukturen 5 sind von der in einem ersten Spritzvorgang aufgebrachten Zwischenschicht 17 aus transparentem Kunststoff eingeschlossen und überdeckt. Die gegen die äussere Schutzschicht 2' angrenzende Oberseite 18 der Zwischenschicht 17 trägt das Druckbild 14, 14' und/oder wenigstens ein weiteres Sicherheitselement 3.

In einer speziellen Ausführung der Erfindung weist die Oberseite 18 der Zwischenschicht 17 zusätzlich oder alleinstehend die von einem Spritzwerkzeug abgeformten, optisch wirksamen Reliefstrukturen 21 auf, die das einfallende Licht als Fresnellinse, als ein Mosaik aus Beugungsmustern oder als Hologramm modifizieren. Die äussere Schutzschicht 2' deckt das Druckbild 14 und/oder das Sicherheitselement 3 und/oder die Reliefstrukturen 21 ab, wobei die strukturierte Grenzfläche wenigstens im Bereich der Reliefstrukturen 21 wie beim Sicherheitselement 3 so ausgeführt ist, dass ein Sprung im Brechungsindex entsteht, damit die geforderte optische Wirkung erzeugt wird. Die Herstellung durch Spritzguss weist als Vorteil eine grosse Genauigkeit in der Dicke der Zwischenschicht 17 auf. Insbesondere ist das optische Zusammenwirken der Informationsmittel auf der Oberseite 18 mit den Informationsmitteln auf der Informationsseite 8 durch die Dicke der Zwischenschicht 17 mitbestimmt. Die Anordnung der Informationsmittel (Sicherheitselemente 3, Beugungsstrukturen 5, Indicia 10, 10', Druckbilds 14, 14', Reliefstrukturen 21 usw.) kann im Register ausgeführt sein, wobei die damit erzielbaren optischen Wirkungen in der WO 97/19820 beschrieben sind.

Die Figur 5 zeigt eine Ausführung des Schichtverbunds 7 mit einer gemäss der eingangs erwähnten EP-709'805 A2 über Antennen 22 mit der Aussenwelt in Verbindung bringbaren integrierten Schaltung 23, die zusammen mit dem Sicherheitselement 3 im Schichtverbund 7 enthalten sind.

Eine andere Ausführung des Schichtverbunds 7 weist eine aus wenigstens zwei Portionen 24, 25 aus sich unterscheidenden Kunststoffmaterialien aufgebaute Schutzschicht 2 (Figur 2) auf. Im gezeichneten Beispiel sind beim Spritzen die flüssigen Kunststoffe von der linken und von der rechten Seite des Schichtverbunds 7 zugeführt worden. Entsprechend den beim Spritzen verwendeten Drücken fliessen die Kunststoffe verschieden schnell über die Informationsseite 8 (Figur 1) und treffen an einer vorbestimmten Stelle aufeinander. Mit Vorteil erfolgt das Spritzen der Schutzschicht 2 in zwei Schritten, wobei zuerst die erste Portion 24 mit dem einen Kunststoff auf das Substrat 1, z.B. im Bereich des Sicherheitselements 3, aufgetragen wird und anschliessend der andere Kunststoff für die zweite Portion 25 gespritzt wird. Bei einer Kombination dieser Ausführung mit der Ausführungsvariante gemäss der Figur 4 weist die erste Portion 24 nur die Dicke der Zwischenschicht 17 (Figur 4) auf und bedeckt das Substrat 1, z.B. im Bereich des Sicherheitselements 3. Die zweite Portion 25 wird in der Dicke der Schutzschicht 2 aufgebracht, wobei die zweite Portion 25 im Bereich der ersten Portion 24 nur die Dicke der äusseren Schutzschicht 2' (Figur 4) erhält. Für das Spritzen der Kunststoffe in mehreren Schritten werden für jeden Schritt die entsprechenden Spritzformen benötigt.

Die Kunststoffe sind so gewählt, dass sie eine innige Verbindung nicht nur zum Substrat 1 bzw. zum Laminat 6 (Figur 1) des Sicherheitselementes 3 eingehen sondern auch zwischen den Portionen 24, 25. Beispielsweise unterscheiden sich die Kunststoffe der beiden Portionen 24, 25 lediglich durch ihre Transparenz oder Einfärbung. Die Schutzschicht 2 gewährleistet im Bereich des Sicherheitselementes 3 die visuelle und/oder die maschinelle Erkennbarkeit des Sicherheitselementes 3 im vorbestimmten Bereich der Wellenlänge der elektromagnetischen Strahlung.

In der Figur 6 enthält der Schichtverbund 7 eine auf der Informationsseite 8 auf dem Substrat 1 aufgeklebte Photographie 26 mit einem als Beglaubigungsmarke über einem Teil der Photographie 26 angeordneten Sicherheitsmerkmal 3. Gegenüber dem Gegenstand in der als Stand der Technik eingangs erwähnten CH-PS 678'835 ist der Vorteil des Schichtverbunds 7 offensichtlich, dass der Schutz der beglaubigten Photographie 26 mittels der Schutzschicht 2 gegen mechanische Einflüsse verbessert ist. Die völlig glatte, zur Rückseite 9 planparallele Oberfläche 11 weist keinerlei Angriffspunkte für mechanische Einflüsse auf. Der Schichtverbund 7 weist keine Beschichtung mit dünnen Kunststoffolien an der Oberfläche 11 oder an der Rückseite 9 (Figur 1) auf, die sich im Laufe des Gebrauchs ablösen können.

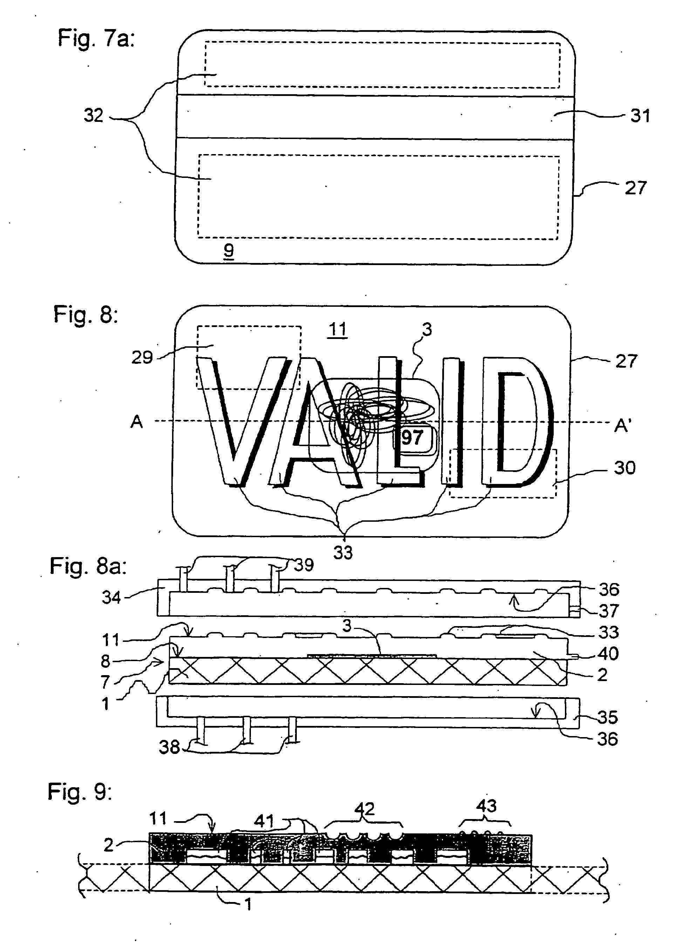

In der Figur 7 ist der Schichtverbund 7 (Figur 6) als flächiger Datenträger 27 geformt. Der Datenträger 27 weist auf der Informationsseite 8 (Figur 6) in beispielhafter Weise angeordnete, durch die Schutzschicht 2 (Figur 6) hindurch sichtbare Informationsträger auf, z.B. die Photographie 26 und das die Photographie 26 teilweise überlappende Sicherheitselement 3, Textfelder 29, 30 usw. In den Textfeldern 29, 30 sind die Indicia 10 (Figur 1) bzw. die Druckbilder 14 (Figur 4) in wenigstens einer Ebene untergebracht. Das Sicherheitselement 3 und die dicke Schutzschicht 2 verhindern wirksam einen Austausch der Photographie 26. Die Ausrüstung des Datenträgers 27 wird gegebenenfalls durch das Modul mit der integrierten Schaltung für elektronisch veränderbare Daten vervollständigt, wobei in der Ansicht der Figur 7 nur ein Kontaktfeld 28 für den Datenaustausch mit der integrierten Schaltung sichtbar ist.

Der Datenträger 27 ist in der Figur 7a von der Rückseite 9 dargestellt. Die Rückseite 9 kann mit einem Informationsstreifen 31 parallel zur Längsausdehnung des Datenträgers 27 beklebt werden, beispielsweise einem Streifen mit einer magnetisierbaren Schicht oder einen aus der EP-718'795 A1 bekannten Streifen mit optischen Markierungen. Beidseits des Informationsstreifens 31 ist in Teilbereichen 32 der Rückseite 9 die mit ultravioletter Strahlung gehärtete Lackschicht 12 (Figur 1) aufgetragen. Dieser Auftrag schützt einerseits den Informationsstreifen 31, da er gegenüber der Lackoberfläche vertieft ist, andererseits durch Überdecken eine in den Teilbereichen 32 visuell erkennbare Information. Die Lackschicht 12 kann ein einfaches Punktmuster bilden oder ist vollflächig aufgetragen.

Der Datenträger 27 in der Figur 8 weist eine strukturierte Oberfläche 11 auf. Diese Oberflächenstrukturen sind aus über die Ebene der Oberfläche 11 erhabenen und/oder in die Oberfläche 11 eingetieften Teilflächen 33 der Oberfläche 11 zusammengesetzt und können graphische Motive, Bilder oder Texte in Buchstaben oder auch Blindenschrift darstellen; beispielsweise bilden die erhabenen Teilflächen 33 in der Zeichnung der Figur 8 das Word VALID. Da die Schutzschicht 2 (Figur 1) transparent ist, sind das Sicherheitselement 3, die Indicia 10 (Figur 1) in den Textfeldern 29, 30, die Photographie 26 (Figur 7) usw. auf der Informationsseite 8 des Substrats 1 trotzdem sichtbar.

Einen Querschnitt längs der Linie A/A' durch den Datenträger 27 zeigt die Figur 8a. Die Herstellung des Schichtverbunds 7 erfolgt in einer Spritzform 34, 35, die ein Oberteil 34 und ein Basisteil 35 umfasst. In der Zeichnung sind Oberteil 34 und Basisteil 35 auseinander gefahren und der Schichtverbund 7 zwischen den Teilen 34, 35 der Spritzform angeordnet. Das auf der Informationsseite 8 angeordnete Sicherheitselement 3 ist vollständig in der Schutzschicht 2 eingebettet und wird von ihr überdeckt. Die Schutzschicht 2 schützt die Informationsträger 3, 10 (Figur 1), 14 (Figur 4), 26 (Figur 6) auf der Informationsseite 8 und erstreckt sich über das ganze Substrat 1. Die Teilflächen 33 stehen nur etwa 0,1 mm über die Ebene der Oberfläche 11 vor, sind aber dennoch gut sichtbar und auch ertastbar. Die wegen des Ausformens aus der Spritzform bedingte Querschnittsform der Teilflächen 33 bietet keinen Angriffspunkt für eine mechanische Zerstörung.

Die rationelle Herstellung des Schichtverbunds 7 erfolgt durch Spritzgiessen der Schutzschicht 2. Das Substrat 1 mit dem auf der Informationsseite 8 angeordneten Informationsträger 3, 10 (Figur 1), 14 (Figur 4), 26 (Figur 6) wird in das Basisteil 35 der Spritzform eingelegt, wobei die Rückseite 9 (Figur 1) in Kontakt mit der Bodenfläche 36 des Basisteils 35 kommt. Anschliessend werden die beiden Teile 34, 35 zusammengefügt und die Spritzform geschlossen, so dass über der Informationsseite 8 ein Hohlraum mit dem Volumen der Schutzschicht 2 entsteht. Durch einen Einspritzkanal 37 wird der durch Erwärmen fliessfähige Kunststoff in den Hohlraum eingepresst, wobei Entlüftungskanäle 39 im Oberteil 34 ein vollständiges Füllen des Hohlraums ermöglichen. Die Struktur der Oberfläche 11 und der Teilflächen 33 ist durch eine entsprechende Ausbildung der Innenfläche 36 des Oberteils 34 vorbestimmt.

Damit das Substrat 1 beim Einspritzen des Kunststoffs nicht von der Bodenfläche 36 abheben kann, wird das Substrat 1 z. B. mittels Unterdruck auf der Bodenfläche 36 festgehalten. Dazu dienen in die Bodenfläche 36 eingelassene Ansaugstutzen 38, in denen mittels einer Vakuumpumpe Unterdruck erzeugt wird. Typischerweise ist die so hergestellte Schutzschicht 2 wenigstens gleich dick wie das Substrat 1, bevorzugt jedoch ist die Schutzschicht 2 höchstens doppelt so dick wie das Substrat 1. Die Verwendung eines zu dünnen Substrats 1 birgt die Gefahr, dass das Substrat 1 beim Spritzgiessen Falten wirft, aufschmilzt oder sich später wie eine Laminierfolie abziehen lässt.

Der eingespritzte Kunststoff der Schutzschicht 2 verbindet sich innig mit dem Substrat 1 und dem Sicherheitselement 3 und kühlt sich dabei aber wegen der Wärmekapazität des Substrats 1 doch so schnell ab, dass das Substrat 1 und die Informationsträger (vor allem das Sicherheitselement 3) dennoch nicht beschädigt werden. Die EP-401'466 A1 beschreibt die Auswirkungen exzessiver Wärmezufuhr auf das Sicherheitselement 3. Die Informationsträger 3, 10, 14, 26 sind wärmefest mit dem Material des Substrats 1 verbunden, damit sich die Informationsträger 3, 10, 14, 26 beim Erzeugen der Schutzschicht 2 bzw. der Zwischenschicht 17 (Figur 4) nicht vom Substrat 1 lösen und deren vorbestimmte Anordnung erhalten bleibt. Allfällige, nach dem Ausformen verbleibende Reste eines Angusses 40 am Kartenrand werden durch ein Nachschneiden der Kartenform beseitigt. Die Schutzschicht 2 (bzw. 2' und 17) und das Substrat 1 sind genügend flexibel, um den Anforderungen an Biegsamkeit der Datenkarte zu genügen.

Für die Herstellung des Schichtverbunds 7 gemäss der Zeichnung der Figur 4 sind zwei Spritzformen 34 (Figur 8a), 35 (Figur 8a) notwendig, eine erste, die den Spritzguss für die Zwischenschicht 17 ermöglicht, und eine zweite für den Spritzguss der äusseren Schutzschicht 2'. Es ist ausreichend nur das Oberteil 34 auszuwechseln, um den jeweils für den Spritzguss notwendigen Hohlraum sicherzustellen.

Zurück zur Figur 8a. Als Kunststoffmaterialien zum Spritzen der Schutzschicht 2 eignen sich unter anderen die Gruppe der Polyester, wie z.B. Polyaethylenterephtalat (PETP, Mylar®), Polybutilenterephtalat (PBT), Polycarbonat (PC, Macrolon®) usw., oder Polyolefine, wie z.B. Polyaethylen (PE), Polypropylen (PP) usw., oder Polymethylmethacrylat (PMMA), ein Copolymer, wie z.B. Acrylnitril-Butadien-Styrol-Copolymere (ABS), oder Polyvinylchlorid (PVC), Polyamid (PA) usw. Insbesondere ist PETP schon bei einer Temperatur von 70-140°C spritzfähig, zeichnet sich durch eine grosse Abriebfestigkeit aus und ist gasdicht und dimensionsstabil. Diese Kunststoffe sind auch als Folien für das Substrat 1 erhältlich. Wenn das Substrat 1 und die Schutzschicht 2 aus geeigneten Kunststoffmaterialien hergestellt sind, ist die Verbindung zwischen dem Substrat 1 und der Schutzschicht 2 nicht mehr zu trennen und bildet einen einzigen Kartenkörper. Optimale Verhältnisse sind bei einem Schichtverbund 7 gegeben, der für das Substrat 1 und die Schutzschicht 2 gleiche Kunststoffe aufweist. Bevorzugte Materialien sind ABS, PETP, PC, PMMA usw., die sowohl glasklar als auch in transparenter oder opaker Qualität eingefärbt lieferbar sind. Beispielsweise kann die Schutzschicht 2 für das visuell wahrnehmbare Licht und die angrenzenden Teile des Spektrums der elektromagnetischen Strahlung völlig transparent (= "glasklar") oder für wenigstens einen Teil des sichtbaren Wellenlängenbereichs oder nur für das visuell nicht wahrnehmbare Licht transparent sein. Die Kunststoffe enthalten mit Vorteil auch fluoreszierende Farbstoffe als Erkennungsmerkmal.

Die opaken Qualitäten eignen sich eher für das Substrat 1. Die Verwendung von transparenten Qualitäten für das Substrat 1 ermöglicht es, das Sicherheitselement 3 durch die Rückseite 9 (Figur 1) hindurch zu betrachten. Zudem können durch registerhaltiges Drucken der Indicia 10 (Figur 1), 14 (Figur 2) auf der Informationsseite 8 (Figur 1) und der Informationen auf der Rückseite 9 (Figur 1) sogenannte Durchsichtsregister geschaffen werden, wobei die Indicia 10, 14 auf der Informationsseite und die Informationen auf der Rückseite 9 unauffällige Muster darstellen, die sich erst in der Durchsicht zu Buchstaben, Ziffern, graphischen Mustern, Emblemen und dergleichen zusammensetzen.

Enthalten die in den beschriebenen Ausführungen verwendeten Sicherheitselemente 3 auch eine mittels Strahlung maschinell auslesbare Information, z.B. eine allgemeine oder eine individuelle Zulassungsnummer, die durch eine Kombination aus den Beugungselementen 5 (Figur 5) dargestellt ist, so ist die Schutzschicht 2 wenigstens für die Strahlung zum Auslesen transparent zu gestalten. Die maschinell auslesbare Information kann alleine oder zusammen mit visuell sichtbaren Mustern im Sicherheitselement 3 enthalten sein. Weist das Sicherheitselement 3 nur mittels infraroter Strahlung maschinell auszulesende Beugungselemente 5 auf, kann beispielsweise die Schutzschicht 2 nur für infrarotes Licht transparent sein; für visuelles Licht hingegen ist die Schutzschicht 2 undurchsichtig und beispielsweise schwarz eingefärbt. Besteht das Substrat 1 aus einem Kunststoff mit dieser Qualität, kann auch ein Auslesen der Information durch das Substrat 1 hindurch erfolgen.

Die Figur 9 zeigt eine Ausführung des Schichtverbunds 7 (Figur 8a) mit einem gemäss der Lehre der eingangs erwähnten EP-741'370 A1 erzeugten Sicherheitselement 3 (Figur 8a). Das Sicherheitselement 3 besteht aus kleinen Laminatstücken 41, die in Form von Punkten, Rechtecken, linienförmigen Flächenstücken mit sehr kleiner Breite, typisch kleiner als 0.5 mm, usw., in einem vorbestimmten Muster als Kreisringe, Guillochen, graphische Darstellungen, Schriftzüge usw. auf der Informationsseite 8 angeordnet sind. Die Laminatstücke 41 bilden zusammen das Sicherheitselement 3. Im dargestellten Querschnitt des Schichtverbunds 7 der Figur 9 sind vom Sicherheitselement 3 nur die Schnitte durch die auf das Substrat 1 aufgeklebten Laminatstücke 41 sichtbar.

Die Schutzschicht 2 weist in die Oberfläche 11 eingeformte flache Strukturen 42 z. B. einer Fresnellinse auf. Als eine weitere Strukturierung sind für Datenträger 27 (Figur 8) erhabene Zeichen 43 der Braille-Blindenschrift vorgesehen, um auch für Sehbehinderte unterscheidbare Datenträger 27 zu erhalten.

Die Ausdehnung der Schutzschicht 2 ist beispielsweise in einer anderen Ausführung auf einen Teil der Informationsseite 8 des Substrats 1 begrenzt. Das Substrat 1 und die Schutzschicht 2 sind wegen der besonders innigen Verbindung an der gemeinsamen Grenzfläche untrennbar miteinander verbunden.

Die verschiedenen Merkmale der hier aufgeführten Ausführungen sind beliebig kombinierbar. Insbesondere kann die freie Oberfläche 11, 11' auch herkömmlich bedruckt werden.

Der Vorteil bei all diesen Ausführungen ist der bessere Schutz aller Indicia auf der Informationsseite 8 (Figur 6) bzw. auf der Oberseite 18 (Figur 4) und insbesondere des Sicherheitselements 3 (Figur 2) gegen betrügerische Manipulationen oder Vandalismus, aber auch gegen Abrieb und Kratzer, die im täglichen Gebrauch nicht zu vermeiden sind.

## Patentansprüche

1. Datenträger (27) aus einem Schichtverbund (7) mit einem von einem flächigen Gegenstand aus Metall, Papier oder Kunststoff gebildeten Substrat (1), mit einer mit dem Substrat (1) verbundenen Schutzschicht (2) und mit wenigstens einem Sicherheitselement (3) auf einer der Schutzschicht (2) zugewandten Informationsseite (8) des Substrats (1) , wobei
die Schutzschicht (2) aus einem spritzgussfähigen Kunststoffmaterial besteht und das Sicherheitselement (3) und wenigstens teilweise die Informationsseite (8) des Substrats (1) so bedeckt, dass das Sicherheitselement (3) zwischen dem Substrat (1) und der Schutzschicht (2) fugenlos eingeschlossen ist, und wobei die Dicke der Schutzschicht (2) ausserhalb des Bereiches des Sicherheitselements (3) oder zusammen mit dem Sicherheitselement (3) wenigstens gleich der Dicke des Substrats (1) ist,
**dadurch gekennzeichnet,**
**dass** das Substrat (1) aus einer Materialbahn ausgestanzt ist, dass das Sicherheitselement (3) auf der Informationsseite (8) des Substrats (1) festgeklebt ist, und dass das Sicherheitselement (3) aus einem Laminat (6) - mit oder ohne Deckschicht (4) - mit eingebetteten Beugungselementen (5) besteht, wobei das Laminat (6) wenigstens zwei Lackschichten umfasst, zwischen welchen die Beugungselemente (5) eingebettet sind.

2. Datenträger nach Anspruch 1,
**dadurch gekennzeichnet,**
**dass** die Schutzschicht (2) höchstens die doppelte Dicke des Substrats (1) aufweist.

3. Datenträger nach Anspruch 1 oder 2,
**dadurch gekennzeichnet,**
**dass** das Substrat (1) und/oder die Schutzschicht (2) transparent ist und wenigstens ein auf der Informationsseite (8) angeordnetes Sicherheitselement (3) durch die transparente Schutzschicht (2) und/oder durch das transparente Substrat (1) hindurch sichtbar ist.

4. Datenträger nach einem der Ansprüche 1 bis 3,
**dadurch gekennzeichnet,**
**dass** auf der Informationsseite (8) wenigstens ein Informationsträger (10, 10'; 26) vorhanden ist, der zwischen dem Substrat (1) und der Schutzschicht (2) bzw. dem Sicherheitselement (3) angeordnet ist.

5. Datenträger nach Anspruch 4,
**dadurch gekennzeichnet,**
**dass** der Informationsträger eine sich teilweise mit dem Sicherheitselement (3) überlappende Photographie (26) ist.

6. Datenträger nach Anspruch 4 oder 5,
**dadurch gekennzeichnet,**
**dass** auf der Informationsseite (8) ein Druckbild (14, 14') aufgebracht ist, das zwischen der Schutzschicht (2) und dem Sicherheitselement (3) bzw. dem Substrat (1) angeordnet ist.

7. Datenträger nach einem der Ansprüche 1 bis 6,
**dadurch gekennzeichnet,**
**dass** die Schutzschicht (2) und das Substrat (1) aus transparentem Kunststoff bestehen, dass Indicia (10; 10'; 14; 14') auf der Informationsseite (8) des Substrats (1) im Register zu einer drucktechnisch aufgebrachten Information auf der Rückseite (9) des Substrats (1) angeordnet sind und dass wenigstens Teile der Indicia (10; 10'; 14; 14') und Teile der drucktechnisch aufgebrachten Information auf der Rückseite (9) Durchsichtsregister bilden, die Buchstaben, Ziffern, graphische Muster, Embleme umfassen.

8. Datenträger nach einem der Ansprüche 1 bis 7,
**dadurch gekennzeichnet,**
**dass** die Schutzschicht (2) aus einer äusseren Schutzschicht (2') und einer Zwischenschicht (17) besteht, wobei die Zwischenschicht (17) zwischen der äusseren Schutzschicht (2') und dem Substrat (1) eingeschlossenen ist, und dass auf der an die äussere Schutzschicht (2') angrenzenden Oberseite (18) der Zwischenschicht (17) zusätzliche Informationsmittel angeordnet sind.

9. Datenträger nach einem der Ansprüche 1 bis 8,
**dadurch gekennzeichnet,**
**dass** die Schutzschicht (2) aus PA, PC, PE, PETP, PMMA, PP, PVC oder ABS besteht.

10. Datenträger nach Anspruch 9,
**dadurch gekennzeichnet,**
**dass** das Substrat (1) und die Schutzschicht (2) aus demselben Kunststoff bestehen.

11. Datenträger nach einem der Ansprüche 1 bis 10,
**dadurch gekennzeichnet,**
**dass** die Schutzschicht (2) in wenigstens zwei aneinandergrenzende Portionen (24; 25) eingeteilt ist, die sich wenigstens hinsichtlich der Einfärbung des Kunststoffmaterials unterscheiden.

12. Datenträger nach einem der Ansprüche 1 bis 11,
**dadurch gekennzeichnet,**
**dass** die Schutzschicht (2) und das Substrat (1) eine integrierte elektronische Schaltung (23) mit Antennen (22) einschliessen, wobei die Antennen (22) zur Aufnahme von Verbindungen mit der Aussenwelt dienen.

13. Datenträger nach einem der Ansprüche 1 bis 12,
**dadurch gekennzeichnet,**
**dass** die Schutzschicht (2) eine Vertiefung (13) mit einer sich nach der Oberseite (11) der Schutzschicht (2) öffnenden Auskleidung (15) zur Aufnahme eines integrierten Moduls mit einer elektronischen Schaltung (23) aufweist, und dass die Auskleidung (15) auf ihrer Aussenseite mit Rippen (16) zur Verankerung in der Schutzschicht (2; 2', 17) und auf der Innenseite mit Nuten zur Verankerung des Moduls ausgestattet ist.

14. Datenträger nach einem der Ansprüche 1 bis 13,
**dadurch gekennzeichnet,**
**dass** die wenigstens zwei Lackschichten transparent ausgebildet sind.

15. Datenträger nach einem der Ansprüche 1 bis 14,
**dadurch gekennzeichnet,**
**dass** die wenigstens zwei Lackschichten unterschiedliche Brechungsindizes aufweisen.

16. Datenträger nach einem der Ansprüche 1 bis 14,
**dadurch gekennzeichnet,**
**dass** auf einer strukturierten Grenzfläche zwischen den wenigstens zwei Lackschichten eine transparente reflektive Schicht aus einem Dielektrikum angeordnet ist.

17. Datenträger nach einem der Ansprüche 1 bis 14,
**dadurch gekennzeichnet ,**
**dass** auf einer strukturierten Grenzfläche zwischen den wenigstens zwei Lackschichten eine reflektive Schicht aus Metall angeordnet ist.

18. Datenträger nach Anspruch 17,
**dadurch gekennzeichnet,**
**dass** die reflektive Schicht aus Metall eine Dicke von mehr als 10 nm aufweist und in Form eines filigranen Linienmusters ausgebildet ist.

19. Verfahren zur Herstellung eines Schichtverbundes (7) für einen Datenträger (27) nach einem der Ansprüche 1 bis 18,
**gekennzeichnet durch** die Verfahrensschritte
a) Ausstanzen des Substrats (1) aus einer neutralen oder mit Indicia versehenen Materialbahn,
b) gegebenenfalls Anbringen von ersten Indicia (10) auf der Informationsseite (8) des Substrats (1),
c) Aufkleben des Laminats (6) auf die Informationsseite (8),
d) gegebenenfalls Bedrucken der Informationsseite (8) und des Laminats (6) mit einem Druckbild (14),
e) Einlegen des Substrats (1) in eine Spritzgussform (34, 35) derart, dass die der Informationsseite (8) gegenüberliegende freie Rückseite (9) des Substrats (1) auf der Bodenfläche (36) des Basisteils (35) der Spritzgussform (34, 35) aufliegt, und Schliessen der Spritzgussform (34, 35),
f) Einspritzen von Kunststoffmaterial in den über der Informationsseite (8) befindlichen Hohlraum der Spritzgussform (34, 35) zum Erzeugen der Schutzschicht (2) und
g) Ausformen des Schichtverbundes (7).

## Claims

1. Data carrier (27) comprising a laminar structure (7) with a substrate (1) formed by a two-dimensional object made of metal, paper or plastic, with a protective layer (2) connected to the substrate (1) and with at least one security element (3) on an information side (8) of the substrate (1) that is facing the protective layer (2), the protective layer (2) consisting of an injection-mouldable plastics material and covering the security element (3) and at least partly the information side (8) of the substrate (1) in such a way that the security element (3) is seamlessly enclosed between the substrate (1) and the protective layer (2), and the thickness of the protective layer (2) outside the region of the security element (3) or together with the security element (3) being at least equal to the thickness of the substrate (1), **characterized in that** the substrate (1) is punched out from a material web, **in that** the security element (3) is adhesively fixed on the information side (8) of the substrate (1), and **in that** the security element (3) comprises a laminate (6) - with or without an outer layer (4) - with embedded diffraction elements (5), the laminate (6) comprising at least two layers of lacquer, between which the diffraction elements (5) are embedded.

2. Data carrier according to Claim 1, **characterized in that** the protective layer (2) is at most twice as thick as the substrate (1).

3. Data carrier according to Claim 1 or 2, **characterized in that** the substrate (1) and/or the protective layer (2) is transparent and at least one security element (3) that is arranged on the information side (8) is visible through the transparent protective layer (2) and/or through the transparent substrate (1).

4. Data carrier according to one of Claims 1 to 3, **characterized in that** on the information side (8) there is at least one information carrier (10, 10'; 26), which is arranged between the substrate (1) and the protective layer (2) or the security element (3).

5. Data carrier according to Claim 4, **characterized in that** the information carrier is a photograph (26) partly overlapping with the security element (3).

6. Data carrier according to Claim 4 or 5, **characterized in that** on the information side (8) there is a printed image (14, 14'), which is arranged between the protective layer (2) and the security element (3) or the substrate (1).

7. Data carrier according to one of Claims 1 to 6, **characterized in that** the protective layer (2) and the substrate (1) consist of transparent plastic, **in that** indicia (10; 10'; 14; 14') are arranged on the information side (8) of the substrate (1) in register with an item of information applied by a printing technique on the rear side (9) of the substrate (1) and **in that** at least parts of the indicia (10; 10'; 14; 14') and parts of the information applied by a printing technique on the rear side (9) form see-through registers, which comprise letters, numbers, graphic patterns, emblems.

8. Data carrier according to one of Claims 1 to 7, **characterized in that** the protective layer (2) comprises an outer protective layer (2') and an intermediate layer (17), the intermediate layer (17) being enclosed between the outer protective layer (2') and the substrate (1), and **in that** additional information means are arranged on the upper side (18) of the intermediate layer (17) that is adjacent to the outer protective layer (2').

9. Data carrier according to one of Claims 1 to 8, **characterized in that** the protective layer (2) consists of PA, PC, PE, PETP, PMMA, PP, PVC or ABS.

10. Data carrier according to Claim 9, **characterized in that** the substrate (1) and the protective layer (2) consist of the same plastic.

11. Data carrier according to one of Claims 1 to 10, **characterized in that** the protective layer (2) is divided into at least two adjacent portions (24; 25), which differ at least with regard to the colouration of the plastics material.

12. Data carrier according to one of Claims 1 to 11, **characterized in that** the protective layer (2) and the substrate (1) enclose an integrated electronic circuit (23) with antennas (22), the antennas (22) serving for picking up communications with the outside world.

13. Data carrier according to one of Claims 1 to 12, **characterized in that** the protective layer (2) has a depression (13) with a lining (15), which opens towards the upper side (11) of the protective layer (2), for receiving an integrated module with an electronic circuit (23), and **in that** the lining (15) is provided on its outer side with ribs (16) for anchoring in the protective layer (2; 2', 17) and on the inner side with grooves for anchoring the module.

14. Data carrier according to one of Claims 1 to 13, **characterized in that** the at least two layers of lacquer are transparently formed.

15. Data carrier according to one of Claims 1 to 14, **characterized in that** the at least two layers of lacquer have different refractive indices.

16. Data carrier according to one of Claims 1 to 14, **characterized in that** a transparent reflective layer of a dielectric is arranged on a structured interface between the at least two layers of lacquer.

17. Data carrier according to one of Claims 1 to 14, **characterized in that** a reflective layer of metal is arranged on a structured interface between the at least two layers of lacquer.

18. Data carrier according to Claim 17, **characterized in that** the reflective layer of metal has a thickness of over 10 nm and is in the form of a filigree line pattern.

19. Method for producing a laminar structure (7) for a data carrier (27) according to one of Claims 1 to 18, **characterized by** the method steps of
a) punching out the substrate (1) from a neutral material web or a material web provided with indicia,
b) if appropriate, applying first indicia (10) to the information side (8) of the substrate (1),
c) applying the laminate (6) to the information side (8),
d) if appropriate, printing a printed image (14) onto the information side (8) and the laminate (6),
e) placing the substrate (1) into an injection mould (34, 35) in such a way that the free rear side (9) of the substrate (1), that is opposite from the information side (8), rests on the bottom surface (36) of the base part (35) of the injection mould (34, 35), and closing of the injection mould (34, 35),
f) injection of plastics material into the cavity of the injection mould (34, 35) located over the information side (8), for producing the protective layer (2), and
g) demoulding of the laminar structure (7).

## Revendications

1. Support de données (27), composé d'une structure en couches (7), comportant un substrat (1) formé par un objet plat en métal, en papier ou en matière plastique, une couche de protection (2) liée au substrat (1) et au moins un élément de sécurité (3) sur une face d'information (8) du substrat (1) tournée vers la couche de protection (2),
la couche de protection (2) étant composée d'une matière plastique apte à être moulée par injection et recouvrant l'élément de sécurité (3) et au moins en partie la face d'information (8) du substrat (1) de telle sorte que l'élément de sécurité (3) soit contenu sans joint entre le substrat (1) et la couche de protection (2), et l'épaisseur de la couche de protection (2) en dehors de la zone de l'élément de sécurité (3) ou conjointement avec l'élément de sécurité (3) étant au moins identique à l'épaisseur du substrat (1),
**caractérisé en ce que**
le substrat (1) est estampé à partir d'une nappe de matériau, l'élément de sécurité (3) est collé sur la face d'information (8) du substrat (1) et l'élément de sécurité (3) se compose d'un stratifié (6) - avec ou sans couche de recouvrement (4) - incorporant des éléments de diffraction (5), le stratifié (6) comprenant au moins deux couches de vernis, entre lesquelles les éléments de diffraction (5) sont incorporés.

2. Support de données selon la revendication 1,
**caractérisé en ce que** la couche de protection (2) présente au maximum le double de l'épaisseur du substrat (1).

3. Support de données selon la revendication 1 ou 2,
**caractérisé en ce que**
le substrat (1) et/ou la couche de protection (2) est transparent et au moins un élément de sécurité (3), disposé sur la face d'information (8), est visible à travers la couche de protection transparente (2) et/ou à travers le substrat transparent (1).

4. Support de données selon l'une quelconque des revendications 1 à 3,
**caractérisé en ce que**
il existe, sur la face d'information (8), au moins un support d'information (10, 10' ; 26), qui est disposé entre le substrat (1) et la couche de protection (2) ou l'élément de sécurité (3).

5. Support de données selon la revendication 4,
**caractérisé en ce que**
le support d'information est une photographie (26), qui chevauche partiellement l'élément de sécurité (3).

6. Support de données selon la revendication 4 ou 5,
**caractérisé en ce que**
sur la face d'information (8), est apposée une image imprimée (14, 14') qui est disposée entre la couche de protection (2) et l'élément de sécurité (3) ou le substrat (1).

7. Support de données selon l'une quelconque des revendications 1 à 6,
**caractérisé en ce que**
la couche de protection (2) et le substrat (1) se composent d'un plastique transparent, des indications graphiques (10 ; 10' ; 14 ; 14') sont disposées sur la face d'information (8) du substrat (1), en alignement avec une information apposée par une technique d'impression sur la face arrière (9) du substrat (1) et au moins des parties des indications (10 ; 10' ; 14 ; 14') et des parties de l'information, apposée par une technique d'impression sur la face arrière (9), forment des alignements translucides, qui comprennent des lettres, des chiffres, des modèles graphiques, des emblèmes.

8. Support de données selon l'une quelconque des revendications 1 à 7,
**caractérisé en ce que**
la couche de protection (2) se compose d'une couche de protection extérieure (2') et d'une couche intermédiaire (17), la couche intermédiaire (17) étant contenue entre la couche de protection extérieure (2') et le substrat (1), et des moyens d'information supplémentaires sont disposés sur la face supérieure (18), adjacente à la couche de protection extérieure (2'), de la couche intermédiaire (17).

9. Support de données selon l'une quelconque des revendications 1 à 8,
**caractérisé en ce que**
la couche de protection (2) se compose de PA, PC, PE, PETP, PMMA, PP, PVC ou ABS.

10. Support de données selon la revendication 9,
**caractérisé en ce que** le substrat (1) et la couche de protection (2) se composent du même plastique.

11. Support de données selon l'une quelconque des revendications 1 à 10,
**caractérisé en ce que**
la couche de protection (2) est partagée en au moins deux portions adjacentes (24 ; 25) qui se différencient au moins eu égard à la coloration de la matière plastique.

12. Support de données selon l'une quelconque des revendications 1 à 11,
**caractérisé en ce que**
la couche de protection (2) et le substrat (1) renferment un circuit électronique (23) avec des antennes (22), les antennes (22) servant à la réception de liaisons en provenance de l'extérieur.

13. Support de données selon l'une quelconque des revendications 1 à 12,
**caractérisé en ce que**
la couche de protection (2) présente un évidement (13) avec un revêtement (15) s'ouvrant vers la face supérieure (11) de la couche de protection (2), pour loger un module intégré avec un circuit électronique (23), et **en ce que** le revêtement (15) est équipé, sur sa face extérieure, de nervures (16) aux fins d'ancrage dans la couche de protection (2) et sur la face intérieure, de rainures aux fins d'ancrage du module.

14. Support de données selon l'une quelconque des revendications 1 à 13,
**caractérisé en ce que** les couches de vernis au moins au nombre de deux sont réalisées de manière transparente.

15. Support de données selon l'une quelconque des revendications 1 à 14,
**caractérisé en ce que** les couches de vernis au moins au nombre de deux présentent des indices de réfraction différents.

16. Support de données selon l'une quelconque des revendications 1 à 14,
**caractérisé en ce que**
une couche réflectrice transparente composée d'un matériau diélectrique est disposée sur une surface limite structurée entre les couches de vernis au moins au nombre de deux.

17. Support de données selon l'une quelconque des revendications 1 à 14,
**caractérisé en ce que**
une couche réflectrice en métal est disposée sur une surface limite structurée entre les couches de vernis au moins au nombre de deux.

18. Support de données selon la revendication 17,
**caractérisé en ce que**
la couche réflectrice en métal présente une épaisseur supérieure à 10 nm et est réalisée en forme de motif de lignes en filigrane.

19. Procédé de fabrication d'une structure en couches (7) pour un support de données (27) selon l'une quelconque des revendications 1 à 18,
**caractérisé par** les étapes de procédé consistant à
a) estamper le substrat (1) à partir d'une nappe de matériau neutre ou munie d'indications graphiques,
b) appliquer le cas échéant des premières indications graphiques (10) sur la face d'information (8) du substrat (1),
c) coller le stratifié (6) sur la face d'information (8),
d) imprimer le cas échéant la face d'information (8) et le stratifié (6) avec une image (14),
e) insérer le substrat (1) dans un moule de moulage par injection (34, 35), de telle sorte que la face arrière libre (9), opposée à la face d'information (8), du substrat (1), s'appuie sur la surface de fond (36) de la partie de base (35) du moule de moulage par injection (34, 35) et fermer le moule de moulage par injection (34, 35),
f) injecter de la matière plastique dans l'espace creux, se trouvant au-dessus de la face d'information (8), du moule de moulage par injection (34, 35) pour produire la couche de protection (2) et
g) démouler la structure en couches (7).
